# EUROPÄISCHE PATENTANMELDUNG

(11) **EP 0 796 028 A2**
(43) Veröffentlichungstag der Anmeldung: **17.09.1997**
(21) Anmeldenummer: 97250076.3
(22) Anmeldetag: 14.03.1997
(51) Int. Cl.: H04Q 11/04

(54) **Telekommunikationsanlage**

(30) Priorität: 14.03.1996 DE 29605537 U
(71) Anmelder: ELMEG GmbH Kommunikationstechnik, D-31228 Peine (DE)
(72) Erfinder: Meyer Andreas, D-38159 Vechelde (DE); Hunfeld Johann, D-31234 Edemissen (DE); Klöpper Dietmar, D-30167 Hannover (DE); Oppermann Thomas, D-38179 Gross Shwülper (DE)
(74) Vertreter: Christiansen, Henning, Dipl.-Ing.

(57) **Zusammenfassung**

Telekommunikationsanlage (1) zum Betrieb von mehreren ISDN-Endgeräten (4.1 bis 4.4, TE_{digital}) am ISDN-Netz mit einer netzseitig angeordneten Schnittstelle zum Anschluß an ein Netzabschlußgerät (2, NT) oder eine mit dem Netzabschlußgerät (2, NT) verbundene ISDN-Anschlußeinheit (7.1 bis 7.4, IAE), einem mit der Schnittstelle verbundenen Bus (S₀) zur Datenübertragung zwischen dem Netzabschlußgerät (NT, 2) und den ISDN-Endgeräten (4.1 bis 4.4, TE_{digital}), mehreren mit dem Bus (S₀) verbundenen integrierten ISDN-Anschlußeinheiten (7.1 bis 7.4, IAE) zur benutzerseitigen Verbindung mit jeweils einem ISDN-Endgerät (4.1 bis 4.4, TE_{digital}) sowie einem Gehäuse zur Aufnahme der einzelnen Komponenten und einem integrierten Abschlußwiderstand (9, AW), der zur Vermeidung von durch Leitungsreflexionen verursachten Übertragungsstörungen an das freie Ende des Busses (S₀) angeschlossen ist.

## Beschreibung

Die Erfindung betrifft eine Telekommunikationsanlage zum Betrieb von mehreren ISDN-Endgeräten am ISDN-Netz gemäß dem Oberbegriff des Anspruchs 1.

Eine derartige Anlage ist beispielsweise aus BADACH, A.: ISDN im Einsatz, DATACOM-Verlag 1994, S. 65 bekannt und wird an das vom ISDN-Netzbetreiber im Hause des Benutzers installierte Netzabschlußgerät (NT - Network Terminator) angeschlossen.

Das Netzabschlußgerät hat die Aufgabe, die ISDN-Anlage mit der digitalen Ortsvermittlungsstelle (DIVO - digitale Vermittlungsstelle Ortsnetz) zu verbinden, um einen Verbindungsaufbau mit anderen Teilnehmern zu ermöglichen. Hierzu weist das Netzabschlußgerät bei einem ISDN-Basisanschluß netzseitig eine sogenannte U_{K0}-Schnittstelle auf, die über eine 2-Draht-Leitung - in der Regel eine herkömmliche Telefonleitung - mit der Vermittlungsstelle verbunden ist und zur Datenübertragung zwei sogenannte B-Kanäle mit einer Übertragungskapazität von jeweils 64 kBit/s sowie zur Steuerung der Datenübertragung einen sogenannten D-Kanal mit einer Übertragungskapazität von 16 kBit/s aufweist. Benutzerseitig ist dagegen eine sogenannte S₀-Schnittstelle vorgesehen, die über einen durch eine 4-Draht-Leitung realisierten Bus - im folgenden entsprechend der gebräuchlichen ISDN-Terminologie als S₀-Bus bezeichnet - den Anschluß der ISDN-Endgeräte ermöglicht.

Das Netzabschlußgerät ist also zum einen erforderlich, um über eine herkömmliche Telefonleitung durch Einsatz komplexer integrierter Schaltungen die vorstehend genannten hohen Ubertragungsraten erreichen zu können. Zum anderen stellt das Netzabschlußgerät entsprechend den Vorschriften des ISDN-Netzbetreibers eine genormte Schnittstelle dar und verhindert so eine Beschädigung oder Störung des ISDN-Netzes durch nicht normgemäße Endgeräte.

Der Anschluß der ISDN-Endgeräte erfolgt hierbei jedoch in der Regel nicht unmittelbar an das Netzabschlußgerät, sondern unter Zwischenschaltung von im Hause des Benutzers verteilt angeordneten sogenannten ISDN-Anschlußeinheiten (IAE), die als Universalanschlußdosen realisiert sind und durch Steckverbindungen den Anschluß verschiedener Typen von Endgeräten ermöglichen. Die einzelnen ISDN-Anschlußeinheiten sind hierbei jeweils an den S₀-Bus angeschlossen und auf diese Weise mit dem Netzabschlußgerät verbunden. Hierdurch entfällt vorteilhaft eine vollständig separate Verbindung der einzelnen Endgeräte mit dem Netzabschlußgerät, was aufgrund der gemeinsamen Nutzung von Leitungsabschnitten durch die Endgeräte zu einer Verringerung des Verkabelungs- und Montageaufwands beiträgt.

Um hierbei Übertragungsstörungen aufgrund von Leitungsreflexionen zu vermeiden, ist der S₀-Bus an seinem freien Ende mit einem separaten Abschlußwiderstand verbunden.

Die vorstehend beschriebene Anlage ermöglicht zwar den Betrieb einer Vielzahl von ISDN-Endgeräten räumlich verteilt im Hause des Benutzers, erfordert jedoch stets die Installation von ISDN-Anschlußeinheiten sowie die Verlegung von Kabeln zwischen dem Netzabschlußgerät und den einzelnen ISDN-Anschlußeinheiten, was mit einem beträchtlichen Investitionsaufwand verbunden ist.

Insbesondere bei ISDN-Anlagen für kleinere Büros oder den Heimbereich (SOHO-Marktsegment - Small Office, Home Office) ist es dagegen wünschenswert, die einzelnen Endgeräte ohne vorherige Installationsarbeiten in Betrieb nehmen zu können ("Plug and play").

Es ist weiterhin eine ISDN-Telekommunikationsanlage bekannt, die über eine Steckverbindung mit einer der ISDN-Anschlußeinheiten der vorstehend beschriebenen Anlage verbunden werden kann. Innerhalb der Telekommunikationsanlage ist diese ISDN-Anschlußeinheit mit mehreren benutzerseitig angeordneten integrierten ISDN-Anschlußeinheiten verbunden, die den Anschluß mehrerer ISDN-Endgeräte ermöglichen. Bei einer bestehenden ISDN-Hausintallation mit einer begrenzten Zahl von ISDN-Anschlußeinheiten - beispielsweise nur einer ISDN-Anschlußeinheit in jedem Raum - ist es auf diese Weise möglich, durch Zwischenschaltung der vorbekannten ISDN-Telekommunikationsanlage ohne weitere Installationsarbeiten weitere Endgeräte anzuschließen und dadurch die Flexibilität der ISDN-Hausinstallation hinsichtlich der Verteilung der Endgeräte zu erhöhen. So ist es beispielsweise möglich, in einem Raum, in dem lediglich eine ISDN-Anschlußeinheit vorhanden ist, durch Zwischenschaltung der vorbekannten Telekommunikationsanlage mehrere ISDN-Endgeräte zu betreiben.

Die vorstehend beschriebene vorbekannte ISDN-Telekommunikationsanlage erfordert jedoch ebenfalls die vorherige Installation von ISDN-Anschlußeinheiten sowie die Verbindung der ISDN-Anschlußeinheiten untereinander bzw. mit dem Netzabschlußgerät.

Aus KAHL, Peter: ISDN - Das neue Fernmeldenetz der Deutschen Bundespost, R.v. Decker's Verlag, Heidelberg, S. 50 ist es weiterhin bekannt, Telekommunikations-Endgeräte direkt an das Netzabschlußgerät anzuschliessen. Auf diese Weise ist es jedoch nicht möglich, die Vermittlungsfunktionen einer Telekommunikationsanlage bereitzustellen.

Der Erfindung liegt somit die Aufgabe zugrunde, eine ISDN-Telekommunikationsanlage zu schaffen, die den Betrieb von ISDN-Endgeräten an einem Netzabschlußgerät ohne vorherige Installations- bzw. Verkabelungsarbeiten ermöglicht.

Die Aufgabe wird, ausgehend von einer Telekommunikationsanlage gemäß dem Oberbegriff des Anspruchs 1, durch dessen kennzeichnende Merkmale gelöst.

Die Erfindung schließt die technische Lehre ein, bei einer ISDN-Telekommunikationsanlage mit mehreren integrierten ISDN-Anschlußeinheiten den S₀-Bus, der die ISDN-Anschlußeinheiten untereinander verbindet, an seinem freien Ende mit einem Abschlußwiderstand zu versehen, um Übertragungsstörungen durch Leitungsreflexionen zu vermeiden und so einen direkten Anschluß der Telekommunikationsanlage an das Netzabschlußgerät zu ermöglichen.

Die erfindungsgemäße Telekommunikationsanlage ermöglicht ohne vorherige Installationsarbeiten den Betrieb mehrerer ISDN-Endgeräte an einem ISDN-Anschluß, der vorzugsweise als ISDN-Basisanschluß ausgeführt ist, d.h. zwei B-Kanäle zur Datenübertragung mit einer Übertragungskapazität von jeweils 64 kBit/s und einen D-Kanal mit einer Übertragungskapazität von 16 kBit/s zur Steuerung der Datenübertragung aufweist. In dieser Ausführungsform weist das Netzabschlußgerät teilnehmerseitig eine sogenannte S₀-Schnittstelle und netzseitig eine sogenannte U_{K0}-Schnittstelle auf, die über eine herkömmliche 2-adrige Telefonleitung mit der Ortsvermittlungsstelle verbunden werden kann.

Die erfindungsgemäße Telekommunikationsanlage ist jedoch nicht auf den Betrieb an einem ISDN-Basisanschluß beschränkt, sondern auch an einem ISDN-Primärmultiplexanschluß betreibbar, der sich von dem ISDN-Basisanschluß durch eine wesentlich größere Übertragungskapazität unterscheidet und zur Datenübertragung 30 B-Kanäle mit einer Übertragungskapazität von jeweils 64 kBit/s sowie zur Steuerung der Datenübertragung einen D-Kanal mit einer Übertragungskapazität von ebenfalls 64 kBit/s aufweist. In diesem Fall weist das Netzabschlußgerät zur Verbindung mit der Ortsvermittlungsstelle netzseitig eine sogenannte U_{2M}-Schnittstelle und teilnehmerseitig eine sogenannte S_{2M}-Schnittstelle auf.

Zum Anschluß an die S₀-Schnittstelle beim ISDN-Basisanschluß bzw. die S_{2M}-Schnittstelle beim ISDN-Primärmultiplexanschluß verfügt die erfindungsgemäße Telekommunikationsanlage über eine Schnittstelle, wobei die Verbindung zwischen Netzabschlußgerät und Telekommunikationsanlage in der Regel über eine 4-Draht-Leitung erfolgt.

Der von dem Netzabschlußgerät bereitgestellte S-Bus - also der S₀-Bus bei einem ISDN-Basisanschluß bzw. der S_{2M}-Bus beim ISDN-Primärmultiplexanschluß - wird innerhalb der erfindungsgemäßen Telekommunikationsanlage weitergeführt und mit mehreren integrierten ISDN-Anschlußeinheiten verbunden, die vorzugsweise als Steckdosen ausgeführt sind und die Verbindung mit ISDN-Endgeräten ermöglichen.

Um einen direkten Anschluß der erfindungsgemäßen Telekommunikationsanlage an das Netzabschlußgerät zu ermöglichen, ohne zuvor ein separates Netzwerk mit einem Abschlußwiderstand installieren zu müssen, verfügt die Telekommunikationsanlage gemäß der Erfindung über einen integrierten Abschlußwiderstand, der am freien Ende des S-Busses angeschlossen ist und somit von Leitungsreflexionen herrührende Übertragungsstörungen vermeidet. Der Abschlußwiderstand weist hierzu vorzugsweise einen Wert auf, der im wesentlichen gleich dem Wellenwiderstand des S-Busses entspricht.

Bei einem physikalisch als 4-Draht-Leitung realisierten S₀-Bus besteht der Abschlußwiderstand in der Regel aus zwei 100Ω-Widerständen, die jeweils zwei Leitungen des vierdrähtigen S₀-Busses miteinander verbinden.

Anstelle des direkten Anschlusses an das Netzabschlußgerät läßt sich die vorstehend beschriebene Telekommunikationsanlage auch indirekt über eine ISDN-Anschlußeinheit einer bereits bestehenden ISDN-Installation anschließen. In diesem Fall kann es vorkommen, daß die bestehende ISDN-Installation bereits einen Abschlußwiderstand aufweist, so daß der in die erfindungsgemäße Telekommunikationsanlage integrierte Abschlußwiderstand nicht erforderlich ist. Bei einem derartigen indirekten Anschluß über eine ISDN-Anschlußeinheit einer bestehenden ISDN-Installation ist der I integrierte Abschlußwiderstand deshalb störend, falls in der letzten ISDN-Anschlußeinheit der bestehenden ISDN-Installation ein Abschlußwiderstand vorhanden ist oder wenn die erfindungsgemäße Telekommunikationsanlage nicht an der letzten ISDN-Anschlußeinheit der bestehenden ISDN-Installation angeschlossen ist. Um die Telekommunikationsanlage auch in diesem Fall betreiben zu können, ist in einer vorteilhaften weiterbildenden Variante der Erfindung vorgesehen, den integrierten Abschlußwiderstand über ein Schaltelement mit dem S-Bus zu verbinden, um den integrierten Abschlußwiderstand bei Bedarf vom S-Bus trennen zu können, wenn in der bestehenden ISDN-Installation bereits ein Abschlußwiderstand vorhanden ist oder aufgrund der Anordnung der erfindungsgemäßen Telekommunikationsanlage innerhalb der bestehenden ISDN-Installation kein integrierter Abschlußwiderstand erforderlich ist.

Die vorstehend beschriebene ISDN-Telekommunikationsanlage ist nicht auf eine den ISDN-Normen eines bestimmten Staates entsprechende Realisierung beschränkt, sondern prinzipiell bei allen digitalen Datenübertragungssystemen anwendbar, die eine entsprechende Struktur aufweisen. Insbesondere ist in diesem Zusammenhang zu erwähnen, daß die erfindungsgemäße Telekommunikationsanlage entsprechend den Normen des Euro-ISDN ausgeführt werden kann.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
Figur 1 als bevorzugtes Ausführungsbeispiel der Erfindung eine Telekommunikationsanlage mit einem integrierten Abschlußwiderstand als Blockschaltbild sowie
Figur 2 die Telekommunikationsanlage aus Figur 1 in perspektivischer Darstellung.

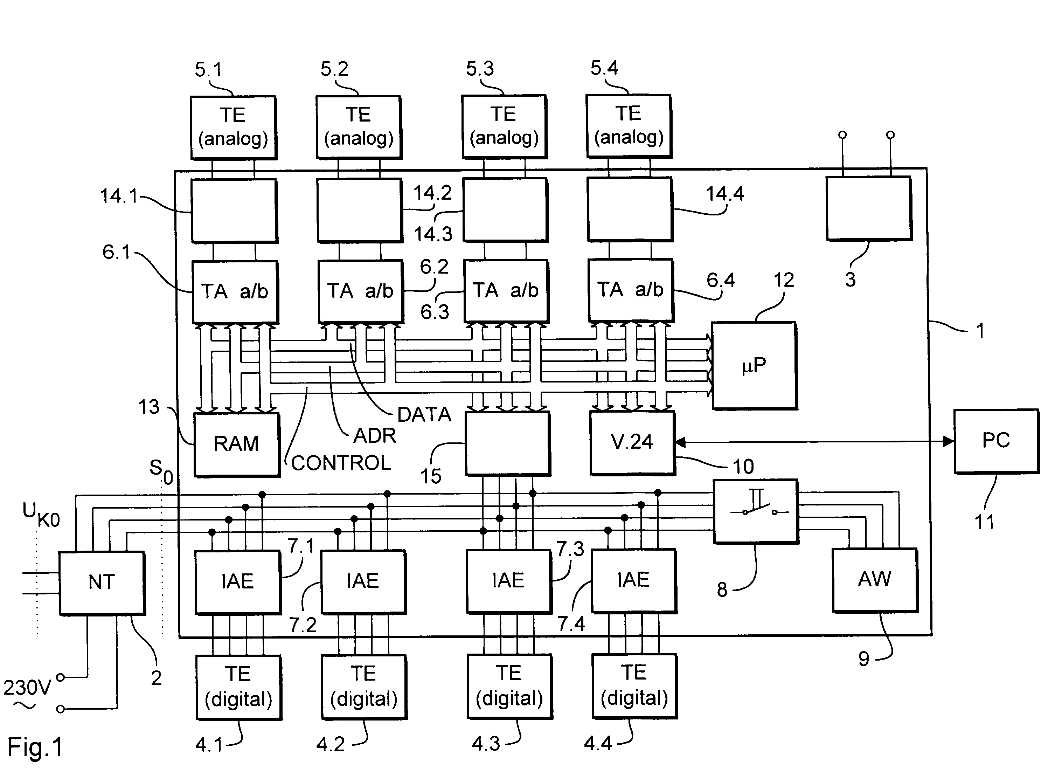

Die in Figur 1 dargestellte Telekommunikationsanlage 1 ermöglicht ohne Installationsarbeiten den Anschluß von bis zu vier digitalen ISDN-Endgeräten 4.1 bis 4.4 und bis zu vier herkömmlichen analogen Endgeräten 5.1 bis 5.4 an einen ISDN-Basisanschluß, der an dem vom ISDN-Netzbetreiber installierten Netzabschlußgerät (NT) 2 bereitgestellt wird.

Zur Verbindung mit anderen Teilnehmern weist das Netzabschlußgerät 2 netzseitig eine U_{K0}-Schnittstelle auf, die über eine herkömmliche 2-adrige Telefonleitung mit einer digitalen Ortsvermittlungsstelle (DIVO) verbunden ist und zur Datenübertragung zwei B-Kanäle mit einer Übertragungskapazität von jeweils 64 kBit/s sowie einen D-Kanal mit einer Übertragungskapazität von 16 kBit/s zur Steuerung der Datenübertragung bereitstellt. Die für eine herkömmliche Telefonleitung relativ hohe Übertragungsrate wird hierbei durch den Einsatz hochintegrierter Schaltungen in dem Netzabschlußgerät 2 ermöglicht.

Teilnehmerseitig verfügt das Netzabschlußgerät 2 dagegen über eine S₀-Schnittstelle, die - wie die U_{K0}-Schnittstelle - zwei B-Kanäle und einen D-Kanal bereitstellt, physikalisch jedoch durch eine 4-Draht-Leitung realisiert ist und in Form einer Steckdose aus dem Netzabschlußgerät 2 herausgeführt ist.

Die Telekommunikationsanlage 1 ist hierbei mit allen Komponenten in einem Gehäuse untergebracht, was einen einfachen Anschluß an das Netzabschlußgerät 2 auch ohne handwerkliche bzw. technische Kenntnisse oder Fertigkeiten ermöglicht, indem die Telekommunikationsanlage 1 in einfacher Weise durch ein 4-adriges Steckverbinderkabel mit dem Netzabschlußgerät 2 verbunden wird. Die Stromversorgung der Telekommunikationsanlage 1 erfolgt über das normale Stromnetz mit einer Spannung von 230 V durch einen integrierten Transformator 3.

Um den Anschluß mehrerer ISDN-Endgeräte 4.1 bis 4.4 zu ermöglichen, ist der an dem Netzabschlußgerät 2 bereitgestellte S₀-Bus innerhalb der Telekommunikationsanlage 1 weitergeführt und mit mehreren in die Telekommunikationsanlage 1 integrierten ISDN-Anschlußeinheiten 7.1 bis 7.4 verbunden, die den Anschluß jeweils eines ISDN-Endgeräts 4.1 bis 4.4 ermöglichen. Die einzelnen ISDN-Anschlußeinheiten 7.1 bis 7.4 sind hierbei jeweils als Steckdosen realisiert, die in der Gehäuseaußenwand der Telekommunikationsanlage 1 angeordnet sind und somit einen Anschluß der ISDN-Endgeräte 4.1 bis 4.4 durch einfaches Einstecken der Anschlußkabel ermöglichen.

Um Übertragungsstörungen durch Leitungsreflexionen auf dem innerhalb der Telekommunikationsanlage 1 weitergeführten S₀-Bus zu vermeiden, ist das freie Ende des S₀-Busses über einen Schalter 8 mit einem Abschlußwiderstand 9 verbunden. Der Schalter 8 ermöglicht hierbei eine Trennung des Abschlußwiderstands 9 vom S₀-Bus, was beispielsweise dann erforderlich ist, wenn die Telekommunikationsanlage 1 nicht direkt mit dem Netzabschlußgerät 2 verbunden ist, sondern an eine ISDN-Anschlußeinheit einer bereits bestehenden ISDN-Installation angeschlossen wird. In diesem Fall weist die bestehende ISDN-Installation in der Regel bereits einen Abschlußwiderstand auf, so daß der in die Telekommunikationsanlage 1 integrierte Abschlußwiderstand 9 nicht erforderlich ist und deshalb durch manuelle Betätigung des Schalters 8 vom S₀-Bus getrennt wird.

Darüber hinaus ermöglicht die dargestellte Telekommunikationsanlage 1 - wie bereits vorstehend erwähnt - den Anschluß von bis zu vier herkömmlichen analogen Endgeräten 5.1 bis 5.4 über herkömmliche TAE-Steckdosen 14.1 bis 14.4, die an der Gehäuseaußenwand der Telekommunikationsanlage 1 angeordnet sind. Dies ermöglicht dem Benutzer eine weitere Verwendung der bereits vorhandenen Endgeräte 5.1 bis 5.4, so daß der Investitionsaufwand bei der Einrichtung eines ISDN-Anschlusses verringert wird.

Die Konvertierung zwischen den analogen Signalen der herkömmlichen Endgeräte 5.1 bis 5.4 einerseits und den digitalen Signalen entsprechend der ISDN-Norm andererseits wird hierbei durch jeweils einen Terminaladapter (TA a/b) 6.1 bis 6.4 durchgeführt.

Die dargestellte Telekommunikationsanlage 1 ermöglicht jedoch nicht nur die Konvertierung zwischen den analogen Signalen der herkömmlichen Endgeräte 5.1 bis 5.4 und den digitalen ISDN-Signalen, sondern darüber hinaus die Nutzung der über den D-Kanal- übertragenen Steuerinformationen, die von den analogen Endgeräten 5.1 bis 5.4 nicht ausgewertet werden können. So wird im ISDN-Netz über den D-Kanal eine Vielzahl von Informationen übertragen, die die Datenübertragung steuern oder Zusatzinformationen über die Verbindung enthalten.

Eine derartige Zusatzinformation ist beispielsweise die sogenannte Multiple Subscriber Number (MSN), die als Zusatz zu der allgemeinen Rufnummer des ISDN-Anschlusses eine Identifizierung und Adressierung eines bestimmten ISDN-Endgeräts ermöglicht.

Darüber hinaus wird bei einer Verbindung zwischen ISDN-Endgeräten über den D-Kanal eine sogenannte Dienstekennung übertragen, die eine Identifizierung der von dem jeweiligen ISDN-Endgerät unterstützten Telekommunikationsdienstleistungen erlaubt und somit eine Verbindung zwischen inkompatiblen ISDN-Endgeräten verhindert.

Um die über den D-Kanal übertragenen Steuer- und Zusatzinformationen auswerten zu können und die jeweiligen Terminaladapter 6.1 bis 6.4 ansteuern zu können, weist die Telekomunikationsanlage 1 ein Mikroprozessorsystem auf, dessen Mikroprozessor 12 über einen S₀-Treiberbaustein 15 mit dem S₀-Bus verbunden ist, um einerseits die von externen ISDNEndgeräten ankommenden Daten dem "richtigen" analogen Endgerät 5.1 bis 5.4 zuführen zu können und andererseits, um den von den herkömmlichen Endgeräten 5.1 bis 5.4 erzeugten und lediglich digitalisierten Signalen die entsprechenden Zusatz- bzw. Steuerinformationen hinzuzufügen.

Darüber hinaus hat das Mikroprozessorsystem die Aufgabe, die Terminaladapter 6.1 bis 6.4 über den Schnittstellenbaustein 15 mit dem S₀-Bus zu verbinden.

Zur Festlegung der Steuer- bzw. Zusatzinformationen weist das Mikroprozessorsystem einen Speicherbaustein 13 auf, der tabellenartig organisiert ist und jedem Anschluß für die analogen Endgeräte 5.1 bis 5.4 jeweils eine Dienstekennung sowie eine MSN zuordnet. Bei einem eingehenden Anruf liest der Mikroprozessor 12 dann aus dem D-Kanal die von dem Anrufer gewünschte MSN aus und leitet den Anruf an das zugehörige analoge Endgerät 5.1 bis 5.4 weiter. Hierzu weist das Mikroprozessorsystem einen Adreßbus auf, der die Adressierung der analogen Endgeräte 5.1 bis 5.4 sowie die Adressierung des Speicherbausteins 13 ermöglicht. Die Übertragung der eigentlichen Daten erfolgt dagegen über einen Datenbus.

Darüber hinaus verfügt die Telekommunikationsanlage 1 über eine serielle Schnittstelle (V.24) 10, die eine Einrichtprogrammierung über einen externen Rechner (PC) 11 ermöglicht. Auf diese Weise ist es beispielsweise möglich, jedem analogen Endgerät 5.1 bis 5.4 eine beliebige MSN zuzuweisen. Hierdurch kann die Telekommunikationsanlage 1 entsprechend den Bedürfnissen des Benutzers konfiguriert werden.

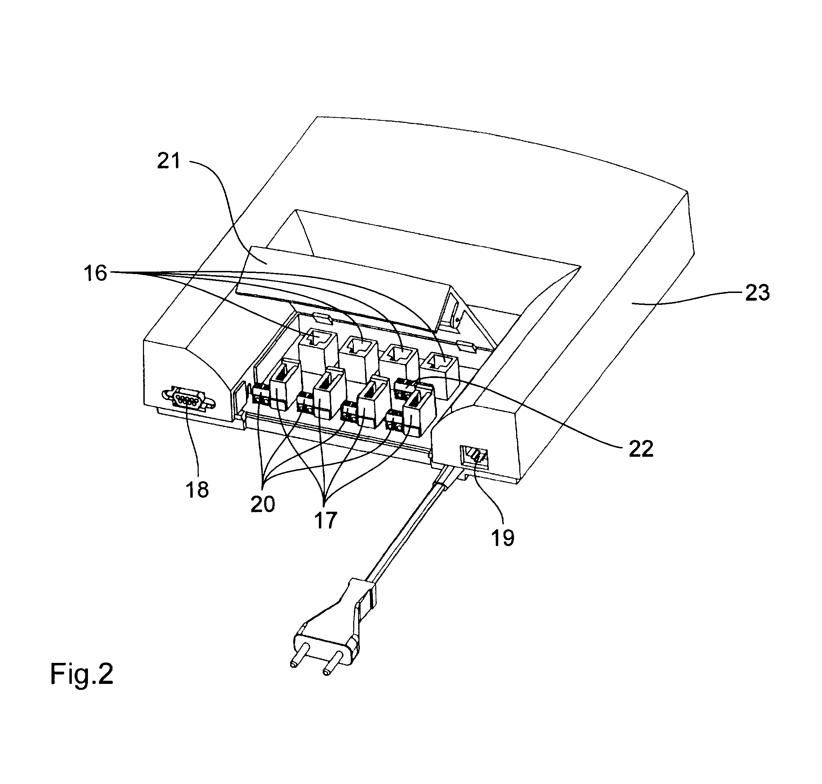

Wie aus der in Figur 2 gezeigten perspektivischen Darstellung ersichtlich, ist die Telekommunikationsanlage 1 in einem Kunststoffgehäuse 23 angeordnet, das wahlweise eine hängende Montage an einer Wand oder den Betrieb als Standgerät ermöglicht.

An der Gehäuseoberseite ist hierbei eine Vertiefung eingelassen, in der - unter einer Abdeckklappe 21 versteckt - vier TAE-Anschlußdosen 17 zum Anschluß analoger Endgeräte sowie vier ISDN-Anschlußdosen 16 zum Anschluß von ISDN-Endgeräten angeordnet sind. Um beim Fehlen eines geeigneten Steckers an dem anzuschließenden Endgerät trotzdem eine Verbindung herstellen zu können, ist neben den Anschlußdosen 17 jeweils eine mit der zugehörigen Anschlußdose parallelgeschaltete Klemmleiste 20 angeordnet.

Darüber hinaus befindet sich unter der Abdeckklappe 21 der Abschlußwiderstand 22, der aus zwei 100Ω-Widerständen besteht, die jeweils mit zwei Leitungen des physikalisch als 4-Draht-Leitung realisierten S₀-Busses verbunden werden, um Leitungsreflexionen auf dem S₀-Bus zu verhindern.

Weiterhin befindet sich an der Außenseite eine Anschlußdose 19 zur Verbindung der Telekommunikationsanlage mit einem Netzabschlußgerät oder einer ISDN-Anschlußeinheit einer bestehenden ISDN-Installation sowie eine 9-polige Anschlußdose 18 zur Verbindung mit der seriellen Schnittstelle eines externen PC's, um die Telekommunikationsanlage individuell konfigurieren zu können.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht.

## Patentansprüche

1. Telekommunikationsanlage (1) zum Betrieb mehrerer ISDN-Endgeräte (4.1 bis 4.4, TE_{digital}) an einem ISDN-Anschluß mit
einer netzseitig angeordneten Schnittstelle zum Anschluß an das Netzabschlußgerät (2, NT) des ISDN-Anschlusses oder eine mit dem Netzabschlußgerät (2, NT) verbundene ISDN-Anschlußeinheit (7.1 bis 7.4, IAE),
einem mit der Schnittstelle verbundenen Bus (S₀) zur Datenübertragung zwischen dem Netzabschlußgerät (NT, 2) und den ISDN-Endgeräten (4.1 bis 4.4, TE_{digital}),
mehreren mit dem Bus (S₀) verbundenen ISDN-Anschlußeinheiten (7.1 bis 7.4, IAE) zur benutzerseitigen Verbindung mit jeweils einem ISDN-Endgerät (4.1 bis 4.4, TE_{digital}) oder
einer weiteren Telekommunikationsanlage sowie einem Gehäuse zur Aufnahme der Schnittstelle, der ISDN-Anschlußeinheiten (7.1 bis 7.4, IAE) und des Busses (S₀),
**gekennzeichnet durch**
einen zur Vermeidung von zusätzlichen Installations- bzw. Verkabelungsarbeiten innerhalb des Gehäuses (23) angeordneten oder mit diesem fest verbundenen Abschlußwiderstand, (9, 22, AW), der zur Verhinderung von durch Leitungsreflexionen verursachten Übertragungsstörungen an das freie Ende des Busses (S₀) angeschlossen ist.

2. Telekommunikationsanlage (1) nach Anspruch 1, **dadurch gekennzeichnet**, daß der Widerstandswert des Abschlußwiderstands (9, 22, AW) zur optimalen Unterdrückung von Leitungsreflexionen im wesentlichen gleich dem Wellenwiderstand des Busses (S₀) ist.

3. Telekommunikationsanlage (1) nach Anspruch 1 oder 2, **dadurch gekennzeichnet,** daß die mit dem Bus (S₀) verbundenen ISDN-Anschlußeinheiten (7.1 bis 7.4, IAE) Steckverbindungen aufweisen.

4. Telekommunikationsanlage (1) nach einem der vorhergehenden Ansprüche, **dadurch gekennzeichnet,** daß der Abschlußwiderstand (9, 22, AW) über ein Schaltelement (8) mit dem Bus (S₀) verbunden ist zur Trennung des Abschlußwiderstands (9, 22, AW) von dem Bus (S₀) bei einem Abschluß des Busses (S₀) durch einen externen Abschlußwiderstand.

5. Telekommunikationsanlage (1) nach einem der vorhergehenden Ansprüche, **dadurch gekennzeichnet,** daß zum Anschluß eines analogen Endgeräts (5.1 bis 5.4) ein mit dem Bus (S₀) verbundener Schnittstellenwandler (6.1 bis 6.4, TA a/b) vorgesehen ist.

6. Telekommunikationsanlage (1) nach einem der vorhergehenden Ansprüche, **dadurch gekennzeichnet,** daß der Bus (S₀) ein S₀-Bus oder ein S_{2M}-Bus ist und/oder im wesentlichen aus einer 4-Draht-Leitung besteht.

7. Telekommunikationsanlage (1) nach einem der vorhergehenden Ansprüche, **dadurch gekennzeichnet**, daß die ISDN-Anschlußeinheiten (7.1 bis 7.4, IAE) zum Anschluß der ISDN-Endgeräte (4.1 bis 4.4, TE_{digital}) jeweils ein Steckverbindungselement (17) und/oder eine Klemmleiste (20) aufweisen.
